# FASCICULE DE BREVET EUROPEEN

(11) **EP 2 552 269 B1**
(45) Date de publication et mention de la délivrance du brevet: **27.02.2019**
(21) Numéro de dépôt: 11717690.9
(22) Date de dépôt: 28.03.2011
(51) Int. Cl.: A43B 5/12, A43B 13/41, A43B 17/16, B29D 35/12, A43B 23/02

(54) **ELEMENT DE PROTECTION POUR ARTICLE CHAUSSANT NOTAMMENT CHAUSSON DE DANSE**
SCHUTZELEMENT FÜR SCHUHWERK, INSBESONDERE BALLETTSCHUH
PROTECTION ELEMENT FOR FOOTWEAR, IN PARTICULAR BALLET SHOE

(30) Priorité: 26.03.2010 FR 1052219
(43) Date de publication de la demande: 06.02.2013
(73) Titulaire: Decathlon, 59650 Villeneuve D'ascq (FR)
(72) Inventeur: DESCARGUES, Christine, F-59000 Lille (FR); GUILLOTEAU, Amélie, F-59118 Wambrechies (FR)
(74) Mandataire: Balesta, Pierre
(86) Numéro de dépôt international: PCT/FR2011/050672
(87) Numéro de publication internationale: WO 2011/117558

(56) Documents cités:
- EP-A1- 1 249 186
- EP-A1- 1 325 688
- WO-A1-2007/113588
- GB-A- 1 220 846
- GB-A- 2 264 221
- US-A1- 2008 209 761
- US-B1- 6 810 603

## Description

L'invention a pour objet un élément de protection de chausson de danse, un chausson de danse muni d'un tel élément de protection, ainsi qu'un procédé de fabrication d'un tel élément de protection.

L'invention concerne le domaine des chaussons de danse, plus communément appelés « pointes », qui permettent à une danseuse de se tenir sur la pointe des orteils et qui nécessitent donc un renfort au niveau de la pointe.

Les chaussons de danse traditionnellement utilisés se composent d'une semelle, généralement en cuir, à laquelle est fixé un revêtement souple que l'on appelle un dessus de chausson, par exemple en satin. De tels chaussons se composent également d'une pointe constituée d'une coque dure ou boîte entourant les orteils, et s'étendant par un cambrion raidisseur, en la partie inférieure du pied, qui se prolonge jusque sous la voûte plantaire.

Un tel chausson doit être à la fois flexible, pour permettre à la danseuse de se déplacer sur une scène, et suffisamment solide pour supporter le poids de la danseuse lorsque celle-ci danse sur les pointes.

En outre, le confort et la protection de la pointe des pieds des danseuses sont deux autres éléments importants. En effet, lors de l'exécution des pointes, la totalité des efforts d'appui au sol, qui peuvent être très importants, est absorbée par l'avant du pied, notamment les orteils, de la danseuse.

L'avant ou la coque est généralement constitué de plusieurs couches de matières, renforçant le chausson, mais le rendant aussi particulièrement inconfortable.

Pour pallier cet inconvénient, les danseuses rajoutent souvent du coton, du papier « bulle » ou encore des morceaux de mousse, afin de réduire l'inconfort pouvant provoquer des douleurs, tout en conservant une épaisseur minimale afin de garder le contact avec le sol.

Il existe par ailleurs des mousses ou patins en matériau résilient de type silicone, que l'on peut insérer en fond de coque et qui jouent le rôle de protège orteil.

De telles solutions posent notamment le problème de ne pas être intégrées au chausson. Les éléments de protection doivent être achetés séparément et renouvelés en fonction de l'usure qui se produit notamment par frottement entre l'élément de protection et la coque.

Même dans les chaussons dans lesquels sont intégrés de façon inamovible une coque et une couche de protection améliorant le confort, généralement en matériau résiliant, cette couche de protection est rajoutée dans le cours du processus de fabrication, en sandwich entre la coque et un revêtement interne. Les frottements potentiels entre la couche de protection et la coque engendrent alors un inconfort et accélèrent l'usure.

A titre d'exemple, on peut citer les articles décrits dans les documents FR 2 921 236, WO 2007/113588 et WO 02/087374.

WO 2007/113588 A1 dévoile un élément de protection de chausson de danse, destiné à être inséré dans la partie avant dudit chausson de danse, comprenant une coque destinée à enserrer au moins les orteils de l'utilisateur. Ladite coque constitue un ensemble monobloc comprenant une partie interne destinée à être en contact avec les orteils de l'utilisateur et formée en matériau résilient présentant une première dureté, par surmoulage à l'intérieur d'une partie externe opposée à ladite partie interne et formée en matériau rigide présentant une deuxième dureté supérieure à ladite première dureté.

Le problème que cherche à résoudre l'invention est donc celui de disposer d'un élément de protection de chausson de danse, qui protège le pied de la danseuse, tout en présentant une rigidité suffisante pour la pratique des « pointes », et en assurant un bon contact avec le sol pour le pied de la danseuse.

L'objet de l'invention est donc d'apporter une solution aux problèmes et inconvénients précités parmi d'autres.

L'invention se rapporte ainsi, selon un premier aspect, à un élément de protection destiné à être inséré dans la partie avant d'un chausson de danse, qui comprend les caractéristiques de la revendication 1.

Cet element de protection comprend une coque destinée à enserrer au moins les orteils de l'utilisateur.

Cette coque constitue un ensemble monobloc intégral rigide consistant en une partie interne destinée à être en contact avec les orteils de l'utilisateur et une partie externe opposée à la partie interne.

La partie interne est formée en matériau résilient présentant une première dureté, par surmoulage à l'intérieur de la partie externe, cette dernière étant formée en matériau rigide présentant une deuxième dureté supérieure à la première dureté.

Ainsi, on peut fabriquer en une seule operation une coque intégrale monobloc à la fois rigide et confortable, préformée à la taille de la danseuse, qui ne perturbe pas la sensation de contact du pied avec le sol nécessaire pour la danse.

Une telle coque intégrale monobloc rigide assure à la fois la fonction de renfort et de protection du chausson, et la fonction de protection des orteils de la danseuse.

Le matériau résilient de la partie interne est un élastomère, de préférence de type SEBS.

La première dureté est sensiblement comprise dans l'intervalle [0 Shore A ; 40 Shore A]. Elle est de preference sensiblement égale à 0 shore A.

Les variantes suivantes de l'invention sont présentées, qui peuvent être considérées seules ou en combinaison avec une ou plusieurs autres.

Le matériau rigide peut être de type matériau plastique, de préférence de type polypropylène.

La deuxième dureté peut être sensiblement comprise dans l'intervalle [90 shore A ; 80 Shore D].

La coque peut comprendre une partie avant de protection se prolongeant vers l'arrière en une partie arrière, par exemple de type languette, apte à être fixée par des moyens de fixation, par exemple de type rivets, avec une première de montage.

La partie arrière peut elle-même constituer un prolongement arrière de la partie externe de la coque, sans pour autant constituer un prolongement arrière de la partie interne de cette coque.

L'invention se rapporte également, selon un deuxième aspect, à un chausson de danse, présentant une partie avant pourvue d'un élément de protection tel que présenté ci-dessus.

En particulier, dans le cas où la coque comprend une partie avant de protection se prolongeant vers l'arrière en une partie arrière, par exemple de type languette, l'article chaussant peut être pourvu d'une première de montage à laquelle la partie arrière de la coque est fixée par l'intermédiaire de moyens de fixation, par exemple par des rivets.

L'invention se rapporte encore, selon un troisième aspect, à un procédé de fabrication d'un élément de protection tel que présenté plus haut.

Le procédé comprend une étape de formation de la partie externe par injection, dans un premier moule, du matériau rigide présentant une deuxième dureté.

Ensuite, on positionne cette partie externe préalablement formée dans un deuxième moule de surmoulage, et on forme la partie interne par injection dans ce deuxième moule du matériau résilient présentant une première dureté inférieure à la deuxième dureté.

D'autres caractéristiques et avantages de l'invention apparaîtront plus clairement et de manière complète à la lecture de la description ci-après des variantes préférées de réalisation, lesquelles sont données à titre d'exemples non limitatifs et en référence aux dessins annexés suivants.
- figure 1 : représente schématiquement l'élément de protection de l'invention,
- figure 2 : représente schématiquement l'élément de protection de la figure 1, en coupe médiane,
- figure 3 : représente schématiquement l'élément de protection de la figure 1 fixé sur une première de montage,
- figure 4 : représente schématiquement un article chaussant de type chausson de danse dans lequel est inséré un élément de protection de l'invention, en coupe.

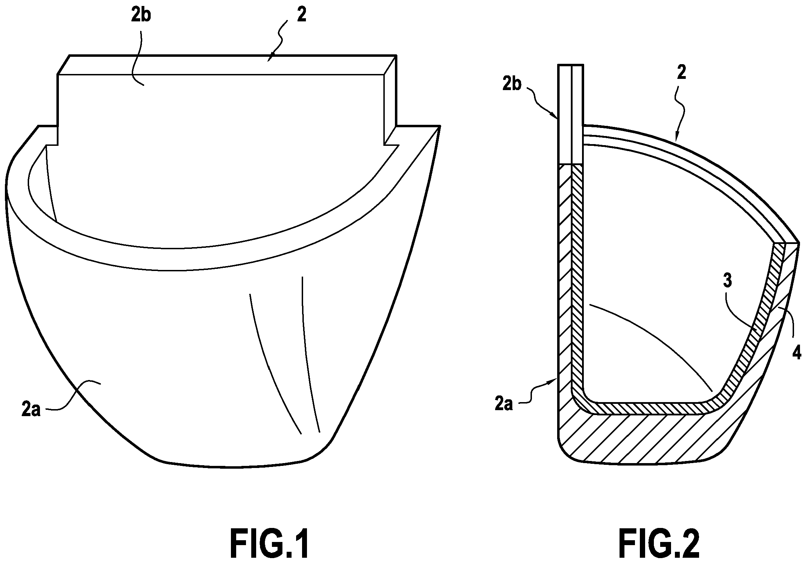

La figure 1 est une représentation schématique d'une variante de réalisation de l'élément de protection de l'invention destiné à être inséré dans un chausson de danse.

Cette figure 1 donne un exemple de la forme d'ensemble de cet élément de protection, avec une coque 2 qui se décompose en une partie avant 2a qui est destinée tout particulièrement à recevoir les orteils d'une danseuse, et qui se prolonge en une partie arrière 2b.

Dans cet exemple, la partie arrière 2b prend la forme d'une languette qui dépasse de la partie avant 2a.

La figure 2 représente l'élément de protection de la figure 1, vue en coupe médiane.

On peut voir ainsi, sur cette figure 2, que la coque 2 est pourvue d'une partie interne 3 destinée à être en contact avec les orteils d'une danseuse, et à l'opposé, d'une partie externe 4.

Dans cette variante, la partie arrière 2b de la coque 2 est elle-même pourvue d'une portion de la partie interne 3 et de la partie externe 4.

Toutefois, alternativement, il est possible d'arrêter la partie interne 3 de la coque 2 avant la partie arrière 2b de cette coque 2, de sorte que, dans ce cas, la partie arrière 2a de la coque 2 ne comprend qu'une portion de la partie externe 4.

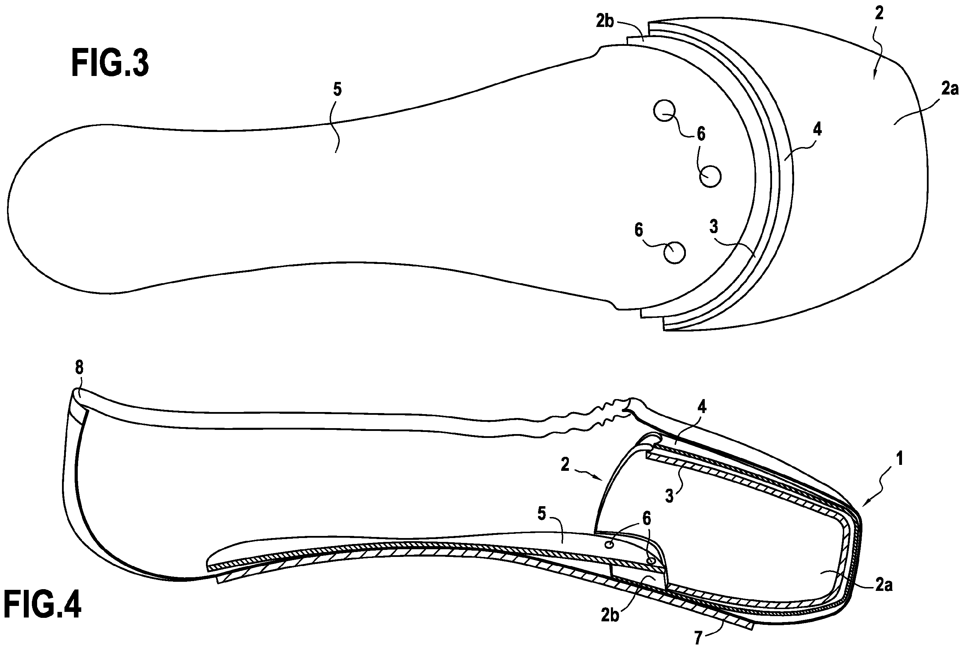

L'élément de protection tel que représenté schématiquement aux figures 3 et 4 est fabriqué de la façon suivante.

La partie externe 4 est tout d'abord formée par injection d'un matériau rigide, tel que du polypropylène, dans un premier moule.

Ensuite, on place la partie externe 4 préalablement formée dans un deuxième moule de surmoulage, puis on injecte dans ce deuxième moule un matériau resilient, qui est un élastomère tel que du SEBS pour former la partie interne 3 intégralement contre la partie externe 4.

On obtient ainsi une coque 2 intégrant la couche interne 3 molle et la couche externe 4 rigide, constituant un ensemble monobloc.

En choisissant un matériau rigide, tel le polypropylène, pour la couche externe 4, et un matériau résilient élastomère, tel du SEBS, pour la couche interne 3, qui soient chimiquement compatibles, on obtient une bonne adhesion de la couche interne 3 sur la couche externe 4 pendant le, et à la suite du, surmoulage.

Il faut par ailleurs que le positionnement de la couche externe 4 dans le moule de surmoulage soit tel que cette couche externe 4 ne bouge pas sous la pression d'injection du matériau resilient.

En particulier, la couche externe 4 préalablement formée doit être correctement plaquée contre le moule de surmoulage.

Le matériau résilient utilisé pour la couche interne 3 et le matériau utilisé pour la couche externe 4 présentent chacun une dureté différente, la dureté du matériau resilient étant inférieure à la dureté du matériau rigide.

En particulier, le matériau resilient peut avoir une dureté de l'ordre de 0 Shore A, et est selon l'invention sensiblement comprise entre 0 Shore A et 40 Shore A.

Par ailleurs, le matériau rigide peut avoir une dureté sensiblement comprise entre 90 Shore A et 80 Shore D.

La figure 3 représente schématiquement l'élément de protection de l'invention, avec la coque 2 comprenant la partie externe 4 et la partie interne 3, assemblée avec une première de montage 5, grace à des moyens de fixation 6 qui sont de type rivets 6.

L'assemblage se fait au niveau de la partie arrière 2b de la coque 2, que cette partie arrière 2b prenne la forme d'une languette qui dépasse de la partie avant 2a, tel que représenté aux figures 1 et 2, ou une autre forme.

On a représenté à la figure 4, dans une vue en coupe, l'élément de protection assemblé avec une première de montage 5, le tout inséré dans un chausson de danse.

Précisément, la coque 2 est insérée par sa partie avant 2a dans la partie avant 1 du chausson, et assemblée par sa partie arrière 2b avec la première de montage 5 par l'intermédiaire des rivets 6.

La première de montage peut être en matériau de type Texon®, c'est-à-dire un matériau à base de fibres d'alpha-cellulose.

Le chausson en lui-même comprend classiquement une semelle 7, par exemple en cuir, et est recouvert d'une couche externe souple 8, par exemple en satin.

Dans cet exemple représenté à la figure 4, la partie arrière 2b de la coque 2, en laquelle vient se fixer la première de montage 5, est constituée uniquement de la partie externe 4 en matériau rigide, la partie interne 3 en matériau resilient s'arrêtant juste avant.

L'ensemble de la description ci-dessus est donné à titre d'exemple et n'est pas limitatif de l'invention.

En particulier, le choix des matériaux rigide et résilient pour la réalisation respectivement de la partie externe 4 et de la partie interne 3 de la coque 2, n'est pas limité au couple polypropylène-SEBS. Tout couple de matériau peut être utilisé, pour autant que le matériau résilient présente une dureté inférieure à la dureté du matériau rigide, et pour autant que les deux matériaux présentent des propriétés d'adhésion chimique mutuelle satisfaisante pour le surmoulage de la partie interne 3 sur la partie externe 4, et ce dans les limites des revendications.

Par ailleurs, la forme exacte de la coque 2, notamment de sa partie avant 2a et de sa partie arrière 2b, n'est pas limitative de l'invention, pour autant que la partie avant 2a entoure les orteils et qu'elle se prolonge en une partie arrière 2b permettant l'assemblage avec une première de montage 5.

## Revendications

1. Elément de protection de chausson de danse, destiné à être inséré dans la partie avant (1) dudit chausson de danse, comprenant une coque (2) destinée à enserrer au moins les orteils de l'utilisateur, **caractérisé en ce que** ladite coque (2) constitue un ensemble monobloc intégral rigide consistant en une partie interne (3) destinée à être en contact avec les orteils de l'utilisateur et formée d'un élastomère, de préférence de type SEBS, présentant une première dureté sensiblement comprise dans l'intervalle [0 Shore A ; 40 Shore A], de préférence sensiblement égale à 0 Shore A, par surmoulage à l'intérieur d'une partie externe (4) opposée à ladite partie (3) interne et formée en matériau rigide présentant une deuxième dureté supérieure à ladite première dureté.

2. Elément de protection selon la revendication **1, caractérisé en ce que** le matériau rigide est de type matériau plastique, de préférence de type polypropylène.

3. Elément de protection selon la revendication **1** ou **2, caractérisé en ce que** la deuxième dureté est sensiblement comprise dans l'intervalle [90 Shore A ; 80 Shore D].

4. Elément de protection selon l'une quelconque des revendications **1 à 3, caractérisé en ce que** la coque (2) comprend une partie avant (2a) de protection se prolongeant vers l'arrière en une partie arrière (2b), par exemple de type languette (2b) apte à être fixée par des moyens de fixation (6), par exemple de type rivets (6), avec une première de montage (5).

5. Elément de protection selon la revendication **4, caractérisé en ce que** la partie arrière (2b) constitue un prolongement arrière de la partie externe (4) de la coque (2), sans constituer un prolongement arrière de la partie interne (3) de la coque (2).

6. Chausson de danse, présentant une partie avant (1) pourvue d'un élément de protection selon l'une quelconque des revendications **1 à 5.**

7. Chausson de danse, présentant une partie avant (1) pourvue d'un élément de protection selon l'une quelconque des revendications **4** et **5,** et d'une première de montage (5), **caractérisé en ce que** la partie arrière (2b) est fixée par des moyens de fixation (6), par exemple par des rivets (6), à ladite première de montage (5).

8. Procédé de fabrication d'un élément de protection de chausson de danse selon l'une quelconque des revendications **1 à 5, caractérisé en ce qu'**il comprend une étape de formation de la partie externe (4) par injection, dans un premier moule, du matériau rigide présentant une deuxième dureté, et une étape de formation de la partie interne (3) par injection, dans un deuxième moule de surmoulage dans lequel est positionnée ladite partie externe (4) préalablement formée, du matériau résilient présentant une première dureté inférieure à ladite deuxième dureté.

## Patentansprüche

1. Schutzelement für einen Tanzschuh, das dazu vorgesehen ist, in den vorderen Teil (1) des Tanzschuhs eingeführt zu werden, umfassend eine Schale (2), die dazu vorgesehen ist, zumindest die Zehen des Benutzers zu umschließen, **dadurch gekennzeichnet, dass** die Schale (2) eine einstückige, eingebaute, starre Einheit darstellt, bestehend aus einem inneren Teil (3), der dazu vorgesehen ist, mit den Zehen des Benutzers in Berührung zu treten, und aus einem Elastomer ausgebildet ist, vorzugsweise vom SEBS-Typ, aufweisend eine erste Härte, die im Wesentlichen im Bereich [0 Shore A; 40 Shore A] liegt, vorzugsweise im Wesentlichen gleich 0 Shore A, mittels Abformen im Inneren eines äußeren Teils (4), das dem inneren Teil (3) gegenüberliegt und aus einem starren Material ausgebildet ist, welches eine zweite Härte aufweist, die größer als die erste Härte ist.

2. Schutzelement nach Anspruch 1, **dadurch gekennzeichnet, dass** das starre Material vom Kunststofftyp, vorzugsweise vom Polypropylentyp ist.

3. Schutzelement nach Anspruch 1 oder 2, **dadurch gekennzeichnet, dass** die zweite Härte im Wesentlichen im Bereich [90 Shore A; 80 Shore D] liegt.

4. Schutzelement nach einem der Ansprüche 1 bis 3, **dadurch gekennzeichnet, dass** die Schale (2) einen vorderen Teil (2a) zum Schutz umfasst, der sich nach hinten in einen hinteren Teil (2b), beispielsweise vom Laschentyp (2b), erstreckt, der dazu ausgelegt ist, anhand von Befestigungsmitteln (6), beispielsweise vom Nietentyp (6), an einer Befestigungsbrandsohle (5) befestigt zu werden.

5. Schutzelement nach Anspruch 4, **dadurch gekennzeichnet, dass** der hintere Teil (2b) eine Verlängerung nach hinten des äußeren Teils (4) der Schale (2) darstellt, ohne dass er eine Verlängerung nach hinten des inneren Teils (3) der Schale (2) darstellt.

6. Tanzschuh, aufweisend einen vorderen Teil (1), der mit einem Schutzelement nach einem der Ansprüche 1 bis 5 versehen ist.

7. Tanzschuh, aufweisend einen vorderen Teil (1), der mit einem Schutzelement nach einem der Ansprüche 4 und 5 und mit einer Befestigungsbrandsohle (5) versehen ist, **dadurch gekennzeichnet, dass** der hintere Teil (2b) anhand von Befestigungsmitteln (6), beispielsweise anhand von Nieten (6), an der Befestigungsbrandsohle (5) befestigt ist.

8. Herstellungsverfahren für ein Schutzelement für einen Tanzschuh nach einem der Ansprüche 1 bis 5, **dadurch gekennzeichnet, dass** es einen Ausbildungsschritt des äußeren Teils (4) mittels Spritzgießen, in eine erste Gießform, des eine zweite Härte aufweisenden starren Materials, und einen Ausbildungsschritt des inneren Teils (3) mittels Spritzgießen, in eine zweite Gießform zum Abformen, in die der zuvor ausgebildete äußere Teil (4) positioniert wird, des elastischen Materials, das eine erste Härte aufweist, welche geringer als die zweite Härte ist, umfasst.

## Claims

1. A protective element for a dance shoe, intended to be inserted in the front part (1) of said dance shoe, comprising a shell (2) intended to encase at least the user's toes, **characterized in that** said shell (2) forms a rigid, integral single-piece assembly consisting of an inner portion (3) intended to be in contact with the user's toes and formed in an elastomer, preferably of SEBS type, having a first hardness substantially in the range of [0 shore A; 40 Shore A], preferably substantially of 0 shore A, by overmolding on the inside of an outer portion (4), opposite said inner portion (3), formed of a rigid material having a second hardness greater than said first hardness.

2. The protective element according to claim 1, **characterized in that** the rigid material is of plastic material type, preferably of polypropylene type.

3. The protective element according to claim 1 or 2, **characterized in that** the second hardness is substantially in the range [90 shore A; 80 Shore D].

4. The protective element according to any of claims 1 to 3, **characterized in that** the shell (2) comprises a front protective part (2a) extending backwards as a back part (2b), for example of tongue type (2b), able to be fixed via fixing means (6), for example of rivet type (6) to an insole (5).

5. The protective element according to claim 4, **characterized in that** the back part (2b) forms a back extension of the outer portion (4) of the shell (2), without forming a back extension of the inner portion (3) of the shell (2).

6. A dance shoe having a front part (1) provided with a protective element according to any of claims 1 to 5.

7. A dance shoe having a front part (1) provided with a protective element according to any of claims 4 and 5 and with an insole (5), **characterized in that** the back part (2b) is fixed by fixing means (6), for example by rivets (6) to said insole (5).

8. A method for manufacturing a protective element for a dance shoe according to any of claims 1 to 5, **characterized in that** it comprises a step to form the outer portion (4) by injecting the rigid material having a second hardness into a first mold, and a step to form the inner portion (3) by injecting the resilient material having a first hardness lesser than said second hardness into a second overmolding mold in which said previously formed outer portion (4) is positioned.
